# EUROPÄISCHE PATENTSCHRIFT

(11) **EP 1 577 503 B1**
(45) Veröffentlichungstag und Bekanntmachung des Hinweises auf die Patenterteilung: **19.07.2006**
(21) Anmeldenummer: 04005483.5
(22) Anmeldetag: 08.03.2004
(51) Int. Cl.: F01D 17/16, F01D 5/14

(54) **Strömungsmaschine, Leitgitter und Montagering hierfür**
Turbo machine, stator vanes and assembly ring
Turbomachine, aubes de guidage et anneau de montage

(43) Veröffentlichungstag der Anmeldung: 21.09.2005
(73) Patentinhaber: BorgWarner Inc., Auburn Hills, MI 48326-2872 (US)
(72) Erfinder: Metz, Dietmar, 67149 Meckenheim (DE); Böning, Ralf, 67829 Reiffelbach (DE)
(74) Vertreter: Balsters, Robert

(56) Entgegenhaltungen:
- EP-A- 0 226 444
- EP-A- 1 357 255
- EP-A- 1 394 364
- US-A- 4 804 316

## Beschreibung

### Gebiet der Erfindung

Die Erfindung bezieht sich auf ein Leitgitter für eine Strömungsmaschine, nach dem Oberbegriff des Anspruch 1.

Wenn im Folgenden von einer "Achse" der Schaufeln die Rede ist, so sei darunter im wesentlichen die geometrische Achse verstanden, denn es sind sowohl Leitgitter mit Leitschaufeln bekannt, welche um einen, keinerlei Kräfte übertragenden Achszapfen drehbar sind, als auch solche, bei denen die Schaufeln an (Kräfte übertragenden) Wellen gelagert sind. Wenn im Folgenden von einer "Strömungsmaschine" die Rede ist, so wird im allgemeinen zwar ein Turbolader gemeint sein, doch gibt es auch andere, ähnliche Strömungsmaschinen mit Turbinen, wie Sekundärluftpumpen u.dgl.

Die Erfindung bezieht sich auch auf eine Strömungsmaschine sowie auf einen Montagering.

### Hintergrund der Erfindung

Ein Turbolader dieser Art ist bereits in der älteren, nicht vorveröffentlichten Patentanmeldung EP 02 018 296.0 beschrieben. Dabei geht es um die integrale Anformung von Abstandhaltemoppen am Ring, welche in diesem zurückweichenden Umfangsbereich angeordnet werden sollen.

Im vorliegenden Falle geht es aber um etwas anderes: Strömungsmaschinen, wie Turbolader, müssen bei den verschiedensten Temperaturen klaglos funktionieren. Die hohen, bei Vollbetrieb auftauchenden Temperaturen führen zu Wärmedehnungen der einzelnen Komponenten, wobei sich diese Dimensionsänderungen natürlich besonders unangenehm bei bewegten Teilen auswirken, die unter Umständen durch Wärmedehnungen und/oder Ablagerungen in ihrer Beweglichkeit gehindert sind bzw. nur mit deutlich erhöhtem Kraftaufwand zu bewegen sind. Dazu kommt, daß die Anforderungen an die zulässigen Toleranzen besonders im Bereiche des Leitgitters relativ hoch sind. All dies betrifft insbesondere die bei einem Leitgitter variabler Geometrie beweglichen Leitschaufeln.

EP-A-1 357 255 beschreibt einen Turbokompressor mit einem Leitgitter bei dem Leitschaufeln kranzförmig um eine zentrale Achse des Kompressors herum auf einem Schaufellagerring angeordnet sind.

US-A-4,804,316 zeigt einen Turbolader ähnlicher Gestaltung. Die Schaufellagerringe beider Dokuments weisen glatte Radialflächen auf.

EP-A-1 394 364 zeigt einen Turbolader, bei dem die Radialfläche des Schaufellagerrings 6 aussen eine axial zurückweichende Ringfläche 19 aufweist, welche Abstandshalter 16 trägt.

### Kurzfassung der Erfindung

Der Erfindung liegt daher die Aufgabe zugrunde, eine Strömungsmaschine der eingangs genannten Art bzw. ein Leitgitter und/oder einen Schaufellagerring derart auszubilden, daß selbst bei in erträglichen Grenzen gehaltenen zulässigen Toleranzen eine Bewegungsstörung der Leitschaufeln verhindern soll.

Erfindungsgemäß gelingt die Lösung dieser Aufgabe ein Leitgitter der eingangs beschriebenen Art, welches ferner die im Kennzeichen des Anspruch 1 angeführten Merkmale aufweist.

Überraschend ist diese Lösung zunächst deshalb, weil durch der axial zurückweichende Flächenabschnitt scheinbar eine größere, statt einer geringeren Toleranz geschaffen wird. Dem ist aber deshalb nicht so, weil dieser Flächenabschnitt nur ein Abschnitt, also eine Teilfläche ist. Im Falle eines Ringes liegt diese vorzugsweise an dessen Umfangsrand - bis in den Bewegungsbereich der Schaufeln - und im Falle einer Schaufel nur im Bereich seitlich von deren freien Ende, wo die Toleranzanforderungen dies zulassen. Im Falle des Ringes führt dies zu einem sich verengenden Strömungskanal, was eher noch günstigere Strömungsverhältnisse schafft.

### Kurzbeschreibung der Zeichnungen

Weitere Einzelheiten der Erfindung ergeben sich an Hand der nachstehenden Beschreibung von in der Zeichnung schematisch dargestellten Ausführungsbeispielen. Es zeigen:
- Fig. 1: einen Turbolader in Perspektivansicht, teilweise im Schnitt, an dem die vorliegende Erfindung zur Anwendung kommt; und
- Fig. 2: eine Perspektivansicht eines Teils eines ersten erfindungsgemäßen Ausführungsbeispieles eines in einen Turbolader nach Fig. 1 einzusetzenden Schaufellagerringes ohne die Bohrungen für die Achsen der Leitschaufeln;
- Fig. 3: eine Perspektivansicht eines Teils eines ersten erfindungsgemäßen Ausführungsbeispieles eines in einen Turbolader nach Fig. 1 einzusetzenden Schaufellagerringes ohne die Bohrungen für die Achsen der Leitschaufeln;
- Fig. 4: eine Perspektivansicht einer in einen Turbolader nach Fig. 1 wahlweise einzusetzenden Schaufel; und die
- Fig. 5 und 6: eine Seitenansicht auf einen Schaufellagerring mit den Schaufeln in geöffneter und geschlossener Stellung der Schaufeln.

### Detaillierte Beschreibung der Zeichnungen

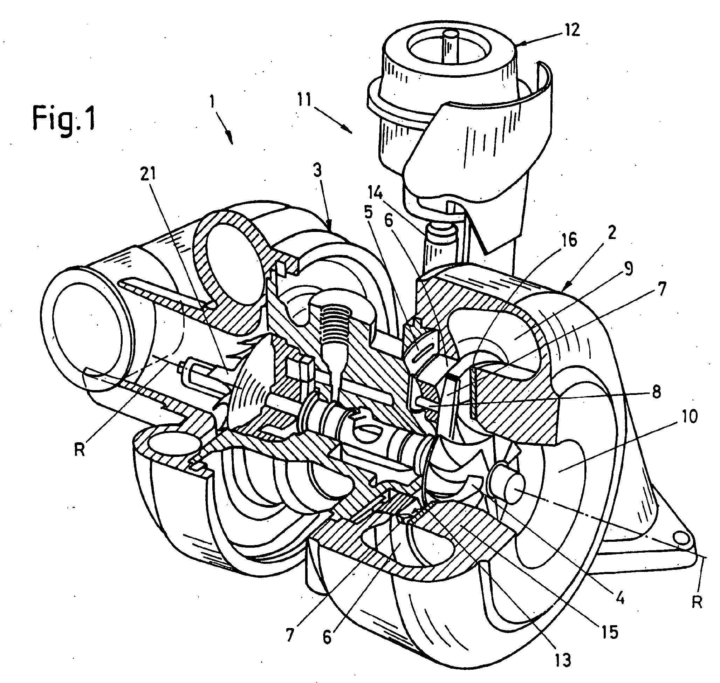

Gemäß Fig. 1 weist ein Turbolader 1 in üblicher Weise einen Turbinengehäuseteil 2 und einen damit verbundenen Kompressorgehäuseteil 3 auf, die entlang einer Rotationsachse R angeordnet sind. Der Turbinengehäuseteil 2 ist teilweise im Schnitt gezeigt, so daß darin ein Schaufellagerring 6 ein radial äußeres Leitgitter bildende, über den Umfang verteilte Leitschaufeln 7 um ihre den Schaufellagerring 6 durchsetzenden Schwenkachsen 8 verdreht, so daß sie zwischen einander Düsenquerschnitte bilden, die je nach der Lage der Leitschaufeln 7, nämlich radial (wie dargestellt) oder mehr tangential, größer oder kleiner sind und den in der Mitte an der Achse R gelegene Turbinenrotor 4 mehr oder weniger mit dem über einen Zufuhrkanal 9 zugeführten und über einen zentralen Stutzen 10 abgeführten Abgas eines Motors beaufschlagen, um über den Turbinenrotor 4 einen auf derselben Welle sitzenden Kompressorrotor 21 anzutreiben. Die erwähnten Schwenkachsen 8 können als Wellen zur Übertragung der Bewegung des Verstellringes 5 auf die Schaufeln 7 ausgebildet sein; sie können aber auch lediglich Achsstummeln darstellen, wenn die Schaufeln 7 an einem ihrer freien Enden geführt sind, wie dies etwa in der US-A-64,19,464 beschrieben ist.

Um die Bewegung bzw. die Lage der Leitschaufeln 7 zu steuern, ist eine Betätigungseinrichtung 11 vorgesehen. Diese kann an sich beliebiger Natur sein, doch ist es bevorzugt, wenn sie, in an sich herkömmlicher Weise, ein Steuergehäuse 12 aufweist, das die Steuerbewegung eines an ihr befestigten Stößelgliedes 14 steuert, dessen Bewegung in an sich bekannter Weise auf einen hinter dem Schaufellagerring 6 (links dahinter in Fig. 1) gelegenen Verstellring 5 in eine leichte Drehbewegung desselben umzusetzen. Durch diese Drehbewegung werden über die Wellen 8 die Leitschaufeln 7 hinsichtlich ihrer Drehlage relativ zum Turbinenrotor 4 so verstellt, daß sie aus einer etwa tangential verlaufenden einen Extremstellung in eine etwa radial verlaufende andere Extremlage verstellbar sind. Dadurch wird das über den Zufuhrkanal zugeführte Abgas eines Verbrennungsmotors mehr oder weniger dem Turbinenrotor 4 zugeführt, bevor es bei dem sich entlang der Drehachse R erstreckenden Axialstutzen 10 wieder austritt.

Zwischen dem Schaufellagerring 6 und einem bei der Montage nützlichen Ring bzw. einer Scheibe 16 zur Befestigung am Turbinengehäuse 2 verbleibt ein relativ schmaler Raum 13 um den Schaufeln 7 eine freie Beweglichkeit zu gestatten. Dieser Raum 13 wird in Axialrichtung einerseits vom Schaufellagerring 6 begrenzt, anderseits entweder von dem mit diesem Schaufellagerring 6 zusammengebauten und von ihm beabstandeten weiteren Ring oder einer Scheibe 16, wie sie in der EP 02 020 412.9 der Anmelderin beschrieben ist (und deren Inhalt hier durch Bezugnahme als geoffenbart gelten soll), oder aber - wie in Fig. 1 ersichtlich - von einer dem Schaufellagerring 6 gegenüberliegenden Wandung des Turbinengehäuses 2, nämlich des ringförmigen Teiles 15. Eine Scheibe bzw. ein Ring ist nach EP 02 020 412.9 vorgesehen, und die nachstehenden Ausführungen gelten analog auch bezüglich des Schaufellagerringes 6.

Natürlich darf dieser Schaufelraum 13 nicht wesentlich größer als die Breite der Schaufeln 7 sein, weil dann die Abgasenergie Leckverluste erleiden würde. Anderseits darf der Schaufelraum 13 aber auch nicht zu knapp bemessen sein, weil dann die Schaufeln 7 klemmen könnten. Dies ist auch deshalb besonders bedeutsam, weil ja durch die heißen Abgase mit einer gewissen Wärmedehnung des Materials gerechnet werden muß. Diese Wärmedehnung ist insofern problematisch, als zur Vermeidung von Strömungsverlusten die Toleranzen sehr klein gehalten werden müssen, anderseits die Konstruktion bei den unterschiedlichsten Temperaturen klaglos funktionieren muß. Eine Schwierigkeit liegt dabei darin, daß nicht die Schaufeln 7 des Leitgitters 5-8 in ihrer Beweglichkeit behindert werden.

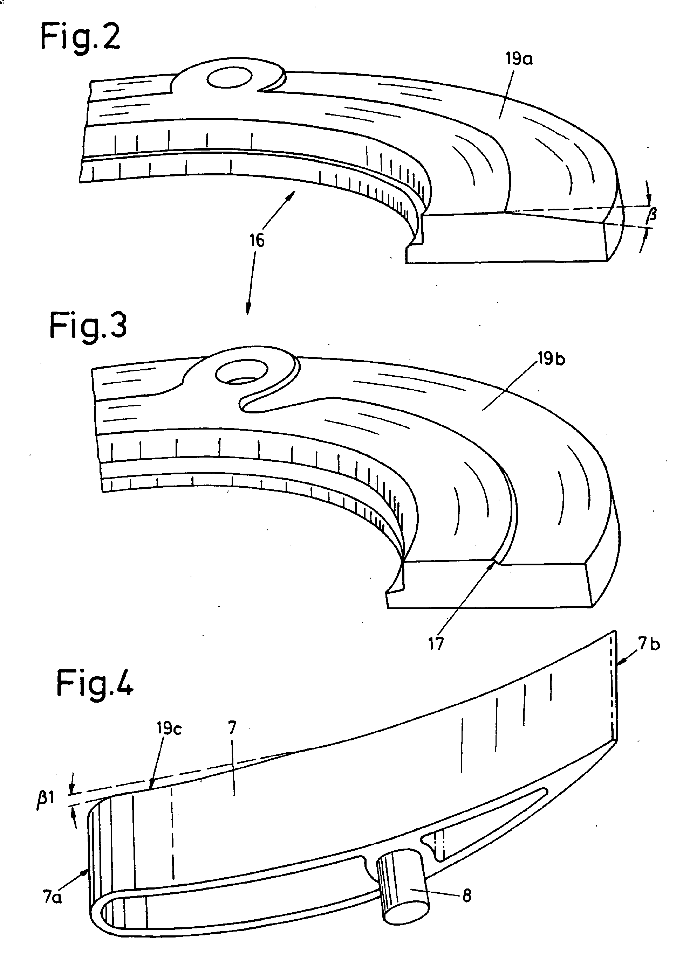

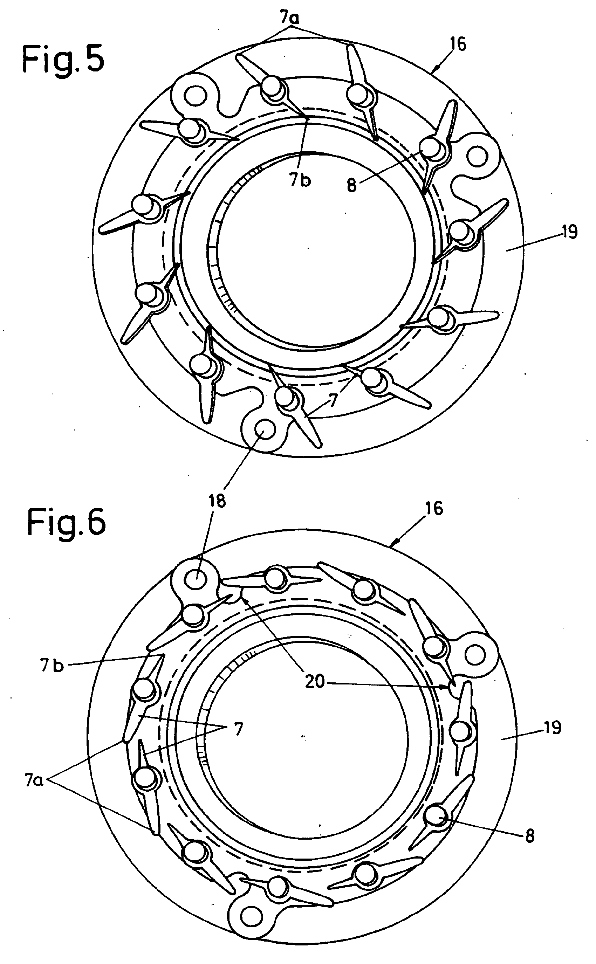

Um diese zu erreichen, ist nach einem ersten Ausführungsbeispiel vorgesehen, daß der in Fig. 2 schematisch gezeigte Teil eines Montageringes 16 wenigstens entlang seines Umfangsrandes eine in axialer Richtung vom Schaufelraum 13 zurückweichende Fläche 19a aufweist. Diese Fläche weicht von der den Schaufeln 7 (in Fig. 2 nicht dargestellt) zugekehrten Fläche des Montageringes 16 unter einem einheitlichen Winkel β zurück, womit in diesem Bewegungsbereich der Schaufeln (wie noch an Hand der Fig. 5 und 6 gezeigt wird) ein größerer Freiraum für die radial äußeren Schaufelenden geschaffen wird. Daher können die äußeren Enden der Schaufeln 7 - selbst irh Falle eines gewissen Spieles ihrer Achsen 8 (vgl. Fig. 1) innerhalb des Schaufellagerringes, sei es durch Toleranzfehler, sei es durch eine gewisse Abnützung - nicht an dieser zurückweichenden Fläche 19a streifen und so in ihrer Bewegung behindert werden.

Die zurückweichende Fläche 19 kann verschiedene Formen annehmen, beispielsweise braucht sie nicht mit einem einheitlichen Winkel β abgeschrägt sein, vielmehr könnte der Winkel in Radialrichtung des Ringes 6 auch variieren. Fig. 3 zeigt eine Ausführung mit einer stufenweise zurückweichenden Fläche 19b mit einer Umfangsstufe 17. Selbstverständlich wären aber auch Kombinationen einer Schrägfläche mit einer oder mehreren Abstufungen möglich. Bevorzugt ist die zurückweichende Fläche an einem der Ringe und insbesondere am Montagering 16 ausgebildet.

Da die Bewegung der Schaufeln 7 relativ zum Schaufellagerring und dem Montagering 16 (oder einer entsprechenden Scheibe) erfolgt, kann die zurückweichende Fläche 19c auch an den Seiten der Schaufeln 7 vorgesehen sein, d.h. die Fläche 19c weicht vom benachbarten Ring derart zurück, daß die Schaufel 7 im Bereiche ihres radial äußeren Endes 7a schmäler als in der Mitte ist und ihre Fläche in Draufsicht eine Abschrägung um den Winkel β1 aufweist. Diese Abschrägung ist in Fig. 4 nur an einer Seite gezeigt, kann jedoch auch an beiden Seiten vorgesehen sein. Ferner wäre es möglich, eine solche (oder abgestufte) Fläche zusätzlich oder alternativ seitlich des radial inneren Endes 7b vorzusehen.

Die Fig. 5 und 6 veranschaulichen die Situation mit gegenüber der Montagescheibe 16 verstellbaren Schaufeln 7 in geöffnetem Zustand (Fig. 5) und im geschlossenen Zustand (Fig. 6).Dabei sieht man, daß das jeweilige radial äußere Ende 7a jeder Schaufel 7 sich über einen Bereich bewegt, der ihr durch die zurückweichende Fläche 19 (sei sie nun abgewinkelt wie die Fläche 19a in Fig. 2 oder abgestuft wie die Fläche 19b in Fig. 3) eine gute Beweglichkeit selbst bei leichter Schrägstellung ihrer Welle 8 im Lager des Schaufellagerringes (6 in Fig. 1) sichert. Man sieht aus den Fig. 5 und 6 auch, daß bei dieser Konstruktion das radial äußere Ende 7a einen relativ größeren Abstand von der geometrischen Achse 8 hat als das radial innere Ende 7b. Daher wird eine allfällige Auslenkung durch ein Lagerspiel der Welle 8 im Schaufellagerring 6 an der Seite 7a auch am größten sein.

Allerdings ist die vorliegende Erfindung nicht auf diese Form beschränkt, vielmehr wäre es ebenso möglich, an der Seite des radial inneren Endes 7b eine zurückweichende Fläche vorzusehen, obwohl dies im allgemeinen weniger bevorzugt sein wird. Denn die radial äußere Zurückweichung der Fläche 19 ergibt nämlich noch zusätzlich eine gewisse Strömungskonzentration und damit günstige Strömungsverhältnisse. Anderseits ist es zur Vermeidung von auf die Achse oder Welle 8 wirkenden Querkräften vorteilhaft, wenn wenigstens die Fläche 19 im Bereiche der Schaufelachsen 8 ohne axiale Zurückweichung ausgebildet ist, wie dies in den Fig. 5 und 6 auch dargestellt ist.

Überdies kann es vorteilhaft sein, die zurückweichende Fläche 19 im Bereiche der Befestigungslöcher 18 (zum Anschrauben an der Ringwand 15 des Turbinengehäuses 2) mit einer Einbuchtung 20 zu versehen, weil bei fräsender Herstellung sonst die Schaufel 7 mit der Stirnseite an der verbleibenden Wand anschlagen könnte.

### Bezugszeichenliste

- 1: Turbolader
- 2: Turbinengehäuseteil
- 3: Kompressorgehäuseteil
- 4: Turbinenrotor
- 5: Verstellring
- 6: Schaufellagerring
- 7: Schaufeln
- 8: Achsen, Wellen v. 7
- 9: Zufuhrkanal
- 10: Stutzen
- 11: Betätigungseinrichtung
- 12: Steuergehäuse v. 11
- 13: Schaufelraum
- 14: Stößelglied v. 11
- 15: ringförmiger Teil v. 2
- 16: Montagering od. -scheibe
- 17: Umfangsstufe
- 18: Befestigungslöcher
- 19: zurückweichende Fläche
- 20: Einbuchtung
- 21: Kompressorrotor

## Patentansprüche

1. Leitgitter variabler Turbinengeometrie für eine Strömungsmaschine, welches einen Schaufellagerring (6) aufweist, an dem jeweils an einer zugehörigen Achse oder Welle (8) eine Vielzahl von um ihre Achse (8) innerhalb eines Bewegungsbereiches verstellbaren Schaufeln (7) in einem begrenzten Schaufelraum (13) rund um den Turbinenrotor (4) gelagert ist, dem Fluid bzw. Abgas so über die Schaufeln (7) in einstellbarer Menge zuführbar ist, welcher Schaufellagerring (6) die eine axiale Begrenzung eines Schaufelraumes (13) bildet, und mit einem weiteren, dem Schaufellagerring (6) axial gegenüberliegenden Montagering (16), der die andere axiale Begrenzung des Schaufelraumes (13) bildet,
**dadurch gekennzeichnet, daß**
mindestens einer der Ringe (6, 16), und/oder die jeweilige, dem wenigstens einen Ring (6, 16) zugekehrte Seitenfläche der Schaufeln (7), einen in axialer Richtung vom Schaufelraum (13) zurückweichende Flächenabschnitt (19) aufweisen, wobei im Falle des axial zurückweichenden Flächenabschnitts (19) an mindestens einem der Ringe (6, 16) der axial zurückweichende Flächenabschnitt (19) bis in den Bewegungsbereich der Schaufeln (7) reicht.

2. Leitgitter nach Anspruch 1, **dadurch gekennzeichnet, daß** wenigstens eines der folgenden Merkmale vorgesehen ist:
a) der Flächenabschnitt (19a) weicht schräg unter einem Winkel (β, β1) zurück;
b) der Flächenabschnitt (19b) weicht unter Bildung einer Stufe (17) zurück;
c) der Flächenabschnitt (19a, 19b) ist am äußeren Umfangsrand wenigstens eines der Ringe (6), insbesondere des Montageringes (16), vorgesehen.

3. Leitgitter nach Anspruch 1 oder 2, **dadurch gekennzeichnet, daß** der jeweilige Ring (6, 16) im Bereiche der Schaufelachsen (8) ohne axiale Zurückweichung ausgebildet ist.

4. Strömungsmaschine, insbesondere Turbolader, die folgendes aufweist:
ein Turbinengehäuse (2) mit mindestens einem Zufuhrkanal (9) für ein Antriebsfluid, wie Abgas, in dem
mindestens ein Turbinenrotor (4) drehbar gelagert ist, und dem das Fluid bzw. Abgas über
ein, den Turbinenrotor (4) radial außen umgebendes Leitgitter nach einem der vorhergehenden Ansprüchen zuführbar ist.

5. Strömungsmaschine nach Anspruch 4, **dadurch gekennzeichnet, daß** wenigstens eines der folgenden Merkmale vorgesehen ist:
a) der Flächenabschnitt (19a) weicht schräg unter einem Winkel (β, β1) zurück;
b) der Flächenabschnitt (19b) weicht unter Bildung einer Stufe (17) zurück;
c) der Flächenabschnitt (19a, 19b) ist am äußeren Umfangsrand wenigstens eines der Ringe (6), insbesondere des Montageringes (16), vorgesehen.

6. Strömungsmaschine nach Anspruch 4 oder 5, **dadurch gekennzeichnet**, der Flächenabschnitt im Bereiche der Schaufelachsen (8) ohne axiale Zurückweichung ausgebildet ist.

7. Montagering (16) für einen Turbolader nach einem der Ansprüche 4-6 bzw. für ein Leitgitter nach einem der Ansprüche 1 bis 3, **dadurch gekennzeichnet, daß** er, entlang seines Umfangsrandes, einen in axialer Richtung vom Schaufelraum (13) zurückweichenden, bis in den radial äußeren Teil des Bewegungsbereiches der Schaufeln (7) reichenden, Flächenabschnitt (19) aufweist.

8. Montagering nach Anspruch 7, **dadurch gekennzeichnet, daß** der Flächenabschnitt (19a) schräg unter einem Winkel (β, β1) zurückweicht
und/oder
daß der Flächenabschnitt (19b) unter Bildung einer Stufe (17) zurückweicht.

9. Montagering nach Anspruch 7 oder 8, **dadurch gekennzeichnet, daß** er im Bereich der Schaufelachsen (8) ohne axiale Zurückweichung ausgebildet ist.

## Claims

1. Stator of variable turbine geometry for a turbo machine, which stator has a blade bearing ring (6) on which a multiplicity of blades (7) adjustable about their axis (8) within a region of movement is mounted in a limited blade space (13) around the turbine rotor (4), in each case on an associated axis or shaft (8), to which blade space (13) fluid or exhaust gas can be fed via the blades (7) in an adjustable amount, which blade bearing ring (6) forms the one axial limitation of the blade space (13), and comprising a further assembly ring (16) which is axially opposite the blade bearing ring (6) and forms the other axial limitation of the blade space (13) **characterized in that** at least one of the rings (6, 16) and/or the respective end face of the blades (7) which faces the at least one ring (6, 16) have an axial surface section (19) receding in the axial direction from the blade space (13), in the case of the axially receding surface section (19) the axially receding surface section (19) extending into the region of movement of the blades (7) on at least one of the rings (6, 16).

2. Stator according to Claim 1 **characterized in that** at least one of the following features is provided:
a) the surface section (19a) recedes obliquely at an angle (β, β1);
b) the surface section (19b) recedes with formation of a step (17);
c) the surface section (19a, 19b) is provided on the outer circumferential edge of at least one of the rings (6) in particular of the assembly ring (16).

3. Stator according to Claim 1 or 2, **characterized in that** the respective ring (6, 16) is formed in the region of the blade axes (8) without axial recession.

4. Turbo machine, in particular turbocharger, which has the following:
a turbine housing (2) having at least one feed channel (9) for a drive fluid such as exhaust gas, in which
at least one turbine rotor (4) is rotatably mounted and to which the fluid or exhaust gas can be fed via
a stator according to any of the preceding Claims which surrounds the turbine rotor (4) radially on the outside.

5. Turbo machine according to Claim 4, **characterized in that** at least one of the following features is provided:
a) the surface section (19a) recedes obliquely at an angle (β, β1);
b) the surface section (19b) recedes with formation of a step (17);
c) the surface section (19a, 19b) is provided on the outer circumferential edge of at least one of the rings (6), in particular of the assembly ring (16).

6. Turbo machine according to Claim 4 or 5, **characterized in that** the surface section is formed in the region of the blade axes (8) without axial recession.

7. Assembly ring (16) for a turbo charger according to any of Claims 4-6 or for a stator according to any of Claims 1-3 **characterized in that** it has, along its circumferential edge, a surface section (19) receding in the axial direction from the blade space (13) and extending into the radially outer part of the region of movement of the blades (7).

8. Assembly ring according to Claim 7, **characterized in that** the surface section (19a) recedes obliquely at an angle (β, β1)
and/or
**in that** the surface section (19b) recedes with formation of a step (17).

9. Assembly ring according to Claim 7 or 8, **characterized in that** it is formed in the region of the blade axes (8) without axial recession.

## Revendications

1. Aubes de guidage à géométrie de turbine variable pour une turbomachine, qui présente un anneau de paliers d'aubes (6), sur lequel, dans un espace d'aubes (13) limité, chaque fois est montée, sur un axe ou arbre (8) afférent, une pluralité d'aubes (7), réglables autour de leur axe (8), dans les limites d'une zone de déplacement, tout autour du rotor de turbine (4), auquel peut ou peuvent être amené(s) du fluide ou des gaz d'échappement, par les aubes (6), en une quantité réglable, ledit anneau de paliers d'aubes (6) formant une limitation axiale d'un espace d'aubes (13), et avec un autre anneau de montage (16), opposé axialement à l'anneau de paliers d'aubes (6) et formant l'autre limitation axiale de l'espace d'aubes (13),
**caractérisées en ce que**
au moins l'un des anneaux (6, 16) et/ou la face latérale respective, tournée vers au moins un anneau (6, 16), des aubes (7) présentent un tronçon de surface (19), placé en retrait en direction axiale vis-à-vis de l'espace d'aubes (13), sachant que, dans le cas du tronçon de surface (19) en retrait axialement, en au moins un des anneaux (6, 16), le tronçon de surface (19) en retrait axialement arrive jusque dans la zone de déplacement des aubes (7).

2. Aubes de guidage selon la revendication 1, **caractérisées en ce qu'**au moins l'une des caractéristiques suivantes est prévue :
a) le tronçon de surface (19a) est en retrait obliquement, sous un angle (β, β1) ;
b) le tronçon de surface (19b) est en retrait, en formant un échelon (17) ;
c) le tronçon de surface (19a, 19b) est prévu sur la bordure périphérique extérieure au moins d'un des anneaux (6), en particulier, de l'anneau de montage (16).

3. Aubes de guidage selon la revendication 1 ou 2, **caractérisées en ce que** l'anneau (6, 16) respectif, dans des zones des axes d'aubes (8), est réalisé sans retrait axial.

4. Turbomachine, en particulier turbocompresseur de suralimentation, présentant les caractéristiques ci-après :
un carter de turbine (2), avec au moins un canal d'amenée (9) pour un fluide d'entraînement, tel que des gaz d'échappement, dans lequel
est monté à rotation au moins un rotor de turbine (4) et auquel peut ou peuvent être amené(s) le fluide ou les gaz d'échappement, par l'intermédiaire
d'aubes de guidage, entourant radialement extérieurement le rotor de turbine (4), selon l'une des revendications précédentes.

5. Turbomachine selon la revendication 4, **caractérisées en ce qu'**au moins l'une des caractéristiques suivantes est prévue :
a) le tronçon de surface (19a) est en retrait obliquement, sous un angle (β, β1) ;
b) le tronçon de surface (19b) est en retrait, en formant un échelon (17) ;
c) le tronçon de surface (19a, 19b) est prévu sur la bordure périphérique extérieure au moins d'un des anneaux (6), en particulier, de l'anneau de montage (16).

6. Turbomachine selon la revendication 4 ou 5, **caractérisée en ce que** le tronçon de surface respectif, dans des zones des axes d'aubes (8), est réalisé sans retrait axial.

7. Anneau de montage (16) pour un turbocompresseur de suralimentation selon l'une des revendications 4 à 6, ou pour des aubes de guidage selon l'une des revendications 1 à 3, **caractérisé en ce que**,
le long de son bord périphérique, il présente un tronçon de surface (19), en retrait en direction axiale vis-à-vis de l'espace d'aubes (13), allant jusqu'à la partie radialement extérieure de la zone de déplacement des aubes (7).

8. Anneau de montage selon la revendication 7, **caractérisé en ce que** le tronçon de surface (19a) est en retrait obliquement sous un angle (β, β1)
et/ou
**en ce que** le tronçon de surface (19b) est en retrait en formant un échelon (17) ;

9. Anneau de montage selon la revendication 7 ou 8, **caractérisé en ce que**, dans la zone des axes d'aubes (8), il est réalisé sans retrait axial.
